# EUROPÄISCHE PATENTSCHRIFT

(11) **EP 1 318 318 B1**
(45) Veröffentlichungstag und Bekanntmachung des Hinweises auf die Patenterteilung: **14.02.2007**
(21) Anmeldenummer: 02026206.9
(22) Anmeldetag: 26.11.2002
(51) Int. Cl.: F16C 13/00, D21G 1/02

(54) **Vorrichtung zur Bestimmung der Position eines Mantelhubes einer Walze**
Apparatus for determining the position of the shell for a driving roller
Dispositif pour déterminer la position de l'enveloppe libre d'un rouleau presseur

(30) Priorität: 05.12.2001 DE 10159723
(43) Veröffentlichungstag der Anmeldung: 11.06.2003
(73) Patentinhaber: Voith Patent GmbH, 89522 Heidenheim (DE)
(72) Erfinder: Linder, Heiko, 47441 Moers (DE)

(56) Entgegenhaltungen:
- DE-A- 2 943 644
- DE-A- 3 325 385
- DE-U- 9 210 137

## Beschreibung

Die Erfindung betrifft eine Vorrichtung zur Bestimmung eines Mantelhubes einer Walze, insbesondere einer Biegeeinstellwalze, die einen um eine feststehende Walzenachse drehbaren Walzenmantel, der auf mindestens einer zur Walzenachse radial verschiebbaren Buchse geführt ist, und eine in die Walze integrierte Aufnahmeeinheit zur Ermittlung einer Verschiebung der Buchse gegenüber der Walzenachse aufweist.

Eine derartige Vorrichtung ist aus DE 33 25 385 A1 bekannt. Dort sind mehrere Sensoren vorgesehen: Einer, der die Position der Buchse relativ zur Achse in Pressenrichtung erfaßt und zwei, die die Bewegung der Buchse senkrecht zur Pressenrichtung erfassen.

Derartige Biegeeinstellwalzen, die auch als Durchbiegungsausgleichswalzen bezeichnet werden, werden in der Regel als Ober- und/oder Unterwalze in einem Walzenstapel eines Kalanders eingesetzt, mit dem eine Papierbahn oder eine vergleichbare Materialbahn mit erhöhtem Druck und gegebenenfalls erhöhter Temperatur beaufschlagt wird.

Biegeeinstellwalzen weisen eine etwa mittig angeordnete Walzenachse auf, die den Walzenmantel durchsetzt. Zur Abstützung des Walzenmantels auf der Walzenachse sind Stützelemente vorgesehen, die üblicherweise hydraulisch verstellbar sind, so daß der Abstand zwischen Walzenmantel und Walzenachse lokal und individuell einstellbar ist. Um dies bedarfsgerecht vornehmen zu können, ist eine Messung der Bewegung des Walzenmantels zur Zentralachse, des sogenannten Mantelhubes, erforderlich.

Aufnehmer zur Erfassung der Position des Walzenmantels sind üblicherweise außerhalb der Walze angeordnet. Beispielsweise ist in der DE 30 26 865 C3 eine Positionsregelung eines Walzenmantels über die Stützelemente beschrieben, welche anhand einer externen Wegmessung zwischen Walzenmantel und Walzenachse geregelt werden. Hierzu ist ein Sensor vor einer Stirnseite des Walzenmantels angeordnet. Die Wegmessung kann beispielsweise als analoges Anzeigeinstrument, als elektrisch-induktives Wegmeßsystem oder als hydraulisch-pneumatisches Meßsystem ausgebildet sein.

Die außerhalb der Walze angeordneten Wegmeßsysteme haben dabei den Nachteil, daß der relative Abstand des Walzenmantels zur Walzenachse nur an der Position gemessen wird, an welcher das Wegmeßsystem befestigt ist. Somit bleibt die streckenlastabhängige Achsdurchbiegung unberücksichtigt. Die Bestimmung des Abstands zwischen Walzenachse und Walzenmantel ist demzufolge vergleichsweise ungenau. Der Meßfehler kann im Bereich von mehreren Millimetern liegen. Darüber hinaus sind bei Walzen, die über ein Getriebe angetrieben werden, üblicherweise die Walzenenden konstruktiv voneinander abweichend ausgebildet. Dabei ist es bedingt durch die Achsdurchbiegung nicht möglich, die Wegaufnehmer auf beiden Seiten so anzubringen, daß beidseitig die Meßwerte auf gleiche Art ermittelt werden können.

Der Erfindung liegt daher die Aufgabe zugrunde, eine Vorrichtung zur Bestimmung eines Mantelhubes einer Walze der oben genannten Art anzugeben, bei welcher eine besonders einfache und genaue Messung ermöglicht ist.

Diese Aufgabe wird erfindungsgemäß dadurch gelöst, daß die Aufnahmeeinheit einen Drehumsetzer aufweist, der eine Verlagerungsbewegung des Walzenmantels relativ zur Walzenachse in eine Drehbwegung eines Sensorteils umsetzt.

Die Erfindung geht dabei von der Überlegung aus, daß eine besonders hohe Meßgenauigkeit bei der Bestimmung des Mantelhubs ermöglicht ist, indem der Mantelhub weitgehend unmittelbar, d. h. unter weitgehendem Verzicht auf zwischengeschaltete Komponenten, erfaßt wird. Um dies zu ermöglichen, knüpft die Erfassung des Mantelhubs an eine Positionsbestimmung der Buchse relativ zur Walzenachse an, da die Buchse ihrerseits hinsichtlich ihrer Positionierung mit dem Walzenmantel korreliert ist. Die Positionierung der jeweiligen Buchse zur Walzenachse ist mit besonderer Genauigkeit auswertbar über eine in die Walze integrierte Aufnahmeeinheit. Hierdurch ist sichergestellt, daß eine die Streckenlast und somit die Achsen- oder Walzendurchbiegung berücksichtigende Messung des Mantelhubes unmittelbar am Verschiebungspunkt, insbesondere an der verschiebbaren Buchse, ausgeführt wird und eine weitgehend genaue Messung ermöglicht ist. Man kann vor allem ausschließen, daß die Buchse an ihre Bewegungsgrenze gefahren und dort überlastet wird. Dabei könnten umliegende Bauteile beschädigt werden. Die Verlagerungsbewegung des Walzenmantels relativ zur Walzenachse ist im wesentlichen eine lineare Bewegung. Wenn man nun diese lineare Bewegung in eine Drehbewegung eines Sensorteils umsetzt, dann kann man diese Drehbewegung parallel zur Walzenachse nach außen führen, d.h. auf eine mechanische Art und Weise. Dies ist eine relativ einfache Möglichkeit, Informationen aus der linearen Bewegung außerhalb der Walzenachse abnehmen zu können.

Eine hohe Meßgenauigkeit bei nur geringem apparativem Aufwand ist erreichbar, indem die Aufnahmeeinheit in vorteilhafter Ausgestaltung einen als Fühlerfinger ausgebildeten Geber umfaßt, der an der Walzenachse um eine Drehachse schwenkbar angeordnet ist, und dessen freies Ende mit einer zugeordneten Buchse in Wirkverbindung steht. Beim Einsatz der Walze in einem Kalander, bei dem eine Verschiebung des Walzenmantels und somit der Walzenhub vornehmlich in vertikaler Richtung erfolgt, kann die Drehachse des Fühlerfingers in einer Ruhe-oder Nullstellung im Wesentlichen horizontal zur zugeordneten Buchse angeordnet sein, so daß der Fühlerfinger in dieser Stellung ebenfalls im Wesentlichen horizontal und somit rechtwinklig zur Hubrichtung ausgerichtet ist. In diesem Fall führt eine Verschiebung der Buchse in Hubrichtung zu einer korrespondierenden Schwenkbewegung des Fühlerfingers um seine Drehachse. Diese Schwenkbewegung ist in ihrem Ausmaß charakteristisch für den jeweiligen Mantelhub und kann somit für eine Auswertung des Mantelhubs herangezogen werden.

Um eine zuverlässige Mitnahme des Fühlerfingers bei einer Verschiebung der Buchse zuverlässig zu gewährleisten, ist der Fühlerfinger vorzugsweise mit seinem freien Ende in einer Öffnung der Buchse geführt. Dabei ist eine zuverlässige Umsetzung einer Verschiebung der jeweiligen Buchse in eine Schwenkbewegung des Fühlerfingers gewährleistet, ohne daß dessen Beweglichkeit in seiner Längsrichtung relativ zur Buchse eingeschränkt ist. Mit anderen Worten: Der innerhalb der Walze erfolgende Hub der Buchse und der damit übereinstimmende Mantelhub werden über die Schwenkbewegung des Fühlerfingers in eine Drehbewegung umgesetzt. Ein hierfür charakteristischer Kennwert kann nach außen geführt werden und dort zur Weiterverarbeitung herangezogen werden.

In einer alternativen Ausgestaltung kann der Drehumsetzer ein Getriebe mit einer Zahnstange und mindestens einem Zahnrad als Geber aufweisen. Wenn sich der Walzenmantel relativ zur Walzenachse verlagert, dann treibt die am Walzenmantel, genauer gesagt, an der Buchse, befestigte Zahnstange das Zahnrad an und versetzt es in eine Drehbewegung. Diese Drehbewegung kann leicht nach außen übertragen werden.

Die Auswertbarkeit der für den Mantelhub charakteristischen Schwenk- oder Drehbewegung ist in besonderem Maße vereinfacht durch geeignete Mittel zur Übertragung der Schwenk- oder Drehbewegung an eine ausgelagerte Position. Dadurch ist eine räumliche Entkopplung des eigentlichen Fühlerfingers vom Ort der Auswertung der Schwenk- oder Drehbewegung erreicht, so daß eine Auswerteeinheit für die Drehbewegung an einer für ihren Betrieb besonders geeigneten Stelle positioniert sein kann. Als geeignetes Mittel für die Übertragung der Drehbewegung ist vorteilhafterweise ein Drehstab vorgesehen, der mit dem Fühlerfinger oder dem Zahnrad dreifest verbunden und im Wesentlichen parallel zur Walzenachse ausgerichtet ist. Bei dieser Anordnung wird eine Auslenkbewegung des Fühlerfingers oder die Rotationsbewegung des Zahnrades, welche durch die Hubbewegung der Buchse oder der Achse ausgeführt wird, über den Drehstab als Drehbewegung an eine Auswerteposition übertragen.

In bevorzugter Ausführung ist eine Umsetzereinheit zur Umsetzung einer Drehbewegung des Gebers um seine Drehachse in ein winkelproportionales elektrisches und/oder mechanisches Signal vorgesehen. Beispielsweise wird die Drehbewegung des Drehstabs in ein elektrisches Signal, z. B. ein Strom- oder Widerstandsänderungssignal, umgesetzt.

Zweckmäßigerweise ist die Umsetzereinheit als Winkelkodierer und/oder als analoger Winkelanzeiger, z. B. Drehspulmeßgerät, ausgebildet. Alternativ kann die Drehbewegung mittels einer verdrehbeanspruchten Metallfeder mit Analogzeiger in ein mechanisches Signal zur Anzeige des betreffenden Mantelhubes, insbesondere dessen Änderung, umgesetzt werden.

Je nach Art und Ausführung kann die Umsetzereinheit außerhalb oder innerhalb der Walze angeordnet sein. Bevorzugt ist die Umsetzereinheit außerhalb der Walze angeordnet. Dazu wird die mittels des Hubes der Buchse über die Dreh- oder Schwenkbewegung des Gebers bewirkte Drehbewegung des Drehstabs über diesen in den Außenbereich der Walze, z. B. zum Winkelkodierer oder zum analogen Winkelanzeiger, geführt. Beim analogen Anzeigeelement wird beispielsweise anhand einer Auslenkung eines Zeigers, welcher auf dem Drehstab im Außenbereich der Walze angeordnet ist, mittels einer entsprechenden Skalierung die Mantelposition bzw. der Mantelhub, d. h. die Änderung der Mantelposition, bestimmt.

Zur Ermittlung und Vergabe eines zum Mantelhub proportionalen Steuersignals ist vorteilhafterweise eine Auswerteeinheit vorgesehen. Beispielsweise ist eine Steuereinrichtung vorgesehen, welche anhand der erfaßten Drehbewegung die Position und somit die Positionsänderung des Walzenmantels gegenüber dem feststehenden Bauteil und/oder weitere Parameter, z. B. Abweichung des Mantelhubes vom Soll-/Istwert, bestimmt. Zur Steuerung des Mantelhubes, d. h. zur Steuerung der Stützelemente, ist vorteilhafterweise das Steuersignal einem Regler zur Lageregelung des Walzenmantels zuführbar.

Die Vorrichtung zur Bestimmung des Mantelhubes ist vorzugsweise in einer Biegeeinstellwalze eingesetzt.

Die mit der Erfindung erzielten Vorteile bestehen insbesondere darin, daß durch die Integration der Aufnahmeeinheit in die Walze eine die Streckenlast und die Walzendurchbiegung berücksichtigende und weitgehend genaue Ermittlung des Mantelhubes ermöglicht ist. Insbesondere durch die unmittelbare Bestimmung der Buchsenverschiebung ist eine besonders genaue Bestimmung des Hubes gewährleistet. Des weiteren sind Differenzfehler in der Messung durch eine beidseitig, d. h. auf der starren und beweglichen Seite der Walze, und/oder endseitig, d. h. an beiden Walzenenden, integrierte Aufnahmeeinheit sicher vermieden. Eine derartige exakte Bestimmung des Mantelhubes stellt darüber hinaus eine weitgehend genaue Positionsregelung des Walzenmantels sicher, wodurch wiederum eine besonders hohe Qualität beim Einsatz der Walze, beispielsweise bei der Papierbehandlung, erreichbar ist.

Ein Ausführungsbeispiel der Erfindung wird anhand einer Zeichnung näher erläutert. Darin zeigen:
- Fig. 1: schematisch eine Walze mit einer integrierten Vorrichtung zur Bestimmung eines Mantelhubes im Längsschnitt,
- Fig. 2: schematisch die Vorrichtung zur Bestimmung des Mantelhubes mit einer in die Walze integrierten Aufnahmeeinheit im Querschnitt,
- Fig. 3: schematisch die Verrichtung nach Fig. 2 in Draufsicht im Längsschnitt,
- Fig. 4: eine alternative Ausgestaltung einer Vorrichtung zur Bestimmung des Mantelhubes und
- Fig. 5: eine Draufsicht auf die Vorrichtung.

Gleiche Teile sind in allen Figuren mit denselben Bezugszeichen versehen.

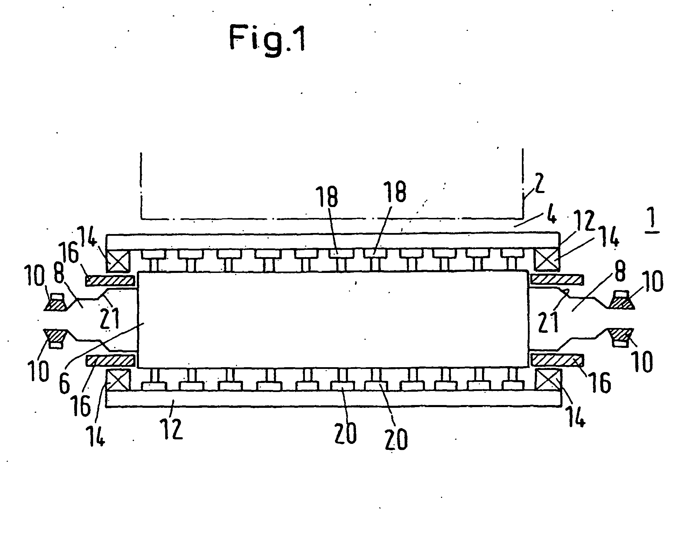

Fig. 1 zeigt eine Walze 1, insbesondere eine durchbiegungsgesteuerte Walze, auch Durchbiegungseinstellwalze genannt, die mit einer strichpunktiert dargestellten Gegenwalze 2 zusammenwirkt, um eine Materialbahn, beispielsweise eine Papierbahn, in einem Nip 4 zwischen den beiden Walzen 1, 2 mit Druck und gegebenenfalls auch erhöhter Temperatur zu beaufschlagen.

Die Walze 1 weist eine feststehende Walzenachse 6 auf, die an ihren axialen Enden Achszapfen 8 mit vermindertem, gegebenenfalls gestuftem Durchmesser aufweist. Mit den Achszapfen 8 ist die Walze 1 über Lager 10, sogenannte Kalottenlager, in einer nicht näher dargestellten Stuhlung gehalten. Die Walze 1 umfaßt darüber hinaus einen drehbaren Walzenmantel 12, der im Bereich seiner axialen Enden über ein weiteres Lager 14 jeweils auf einer Buchse 16, auch Lagerring oder Führungselement genannt, gelagert ist.

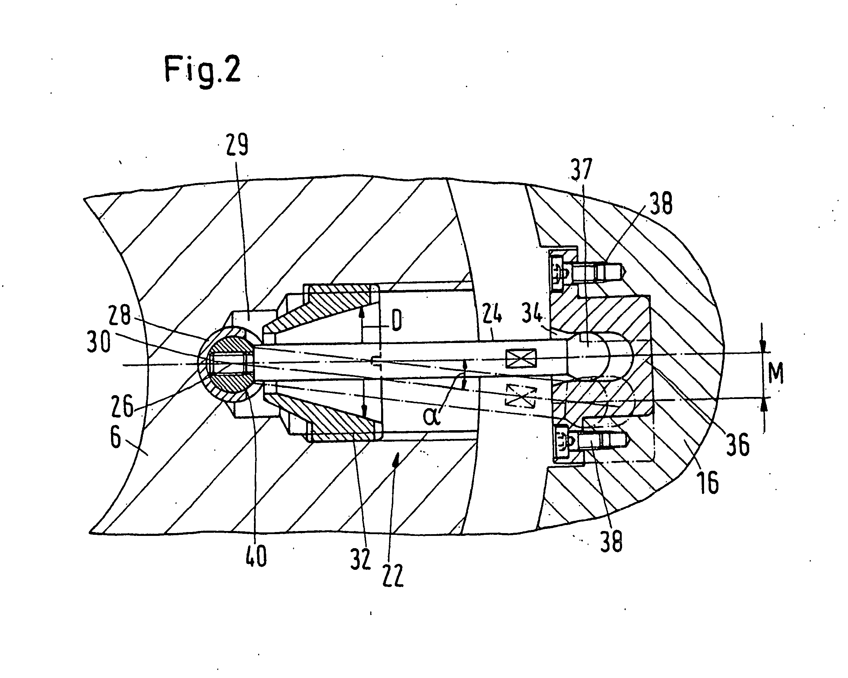

Der Walzenmantel 12 ist gegenüber der Walzenachse 6 mit einer Reihe von Stützelementen 18, beispielsweise hydrostatischen Stützelementen, nach oben, und mit einer zweiten Reihe von Stützelementen 20 nach unten abgestützt. Die Stützelemente 18, 20 wirken in Pressenrichtung. In an sich bekannter Weise läßt sich durch eine Ansteuerung der einzelnen Stützelemente 18 und 20 eine Einstellung der Durchbiegung des Walzenmantels 12 erreichen. Darüber hinaus können diese Stützelemente 18, 20 auch dazu verwendet werden, den Walzenmantel 12 insgesamt gegenüber der Walzenachse 6 anzuheben oder abzusenken. Hierzu ist die Buchse 16 gegenüber der drehfesten Walzenachse 6 oder einem mit der Walzenachse 6 verbundenen und feststehenden Bauteil 21 in Pressenrichtung verschiebbar. Der Walzenmantel 12 kann daher insgesamt einen Hub, den sogenannten Mantelhub M (Fig. 2), ausführen.

Der Mantelhub M kann als Führungsgröße bei der Papierbehandlung von besonderer Bedeutung sein. Daher ist eine besonders präzise Erfassung des Mantelhubs M auch beim Betrieb der Walze 1 besonders wichtig. Um eine hochpräzise Bestimmung des Mantelhubs M zu ermöglichen, weist die Walze 1 eine integrierte Aufnahmeeinheit22 auf, welche in der Fig. 2 im Querschnitt näher dargestellt ist. Die Aufnahmeeinheit 22 umfaßt einen gegenüber der Achse 6 verschwenkbaren, im übrigen aber ortsfesten Fühlerfinger 24, der für eine Umsetzung einer linearen Positionsverschiebung der Buchse 16 gegenüber der Walzenachse 6 in eine Drehbewegung ausgebildet ist und endseitig mit der Buchse 16 in Wirkverbindung steht. Dazu ist der Fühlerfinger 24 an der feststehenden Walzenachse 6 oder dem feststehenden Bauteil 21 um eine Drehachse 26 schwenkbar angeordnet und drehfest mit einem Drehstab 40 verbunden, der bei einer Schwenkbewegung des Fühlerfingers 24 um die Drehachse 26 verdreht wird. In seiner Ruheposition nimmt der Fühlerfinger 24 dabei eine nahezu horizontale Ausrichtung ein, so daß eine im Wesentlichen vertikale Verschiebung der Buchse 16 zur Walzenachse 6, also ein sich verändernder Mantelhub M, besonders wirksam in eine Schwenkbewegung des Fühlerfingers 24 umgesetzt wird, wie dies durch den Winkel a symbolisiert ist.

Zur achsenseitigen Fixierung des Fühlers 24 ist eine Halterung 28 vorgesehen. Die Halterung 28 ist beispielsweise durch ein zur Längsachse parallel in einer Bohrung 29 angeordnetes Rohr 30 und einen in Radialrichtung auf das Rohr 30 angeordneten Führungsring 32 gebildet.

Der Führungsring 32 ist beispielsweise durch einen umgekehrten kegelstumpfförmigen Körper gebildet und weist einen in Radialrichtung zunehmenden Durchmesser D auf. Somit ist der Fühlerfinger 24 um die Drehachse 26 in Umfangsrichtung schwenkbar angeordnet, wobei die maximale Bewegung des Fühlerfingers 24 durch den Öffnungswinkel des Durchmessers D des Führungsrings 32 begrenzt wird. Dabei ist der Durchmesser D in Abhängigkeit von einer maximal zulässigen linearen Bewegung des Walzenmantels 12 vorgegeben.

Zur Aufnahme der Bewegung des Walzenmantels 12 anhand der Bewegung der Buchse 16 oder des Lagerrings ist das frei bewegliche Ende des Fühlers 24 in einer Öffnung 34 einer Halterung 36 der Buchse 16 geführt. Dabei ist die Öffnung 34 annähernd formschlüssig zu einem endseitigen Kugelkopf 37 des Fühlerfingers 24 gewählt, so daß der Fühlerfinger 24 eine einer vertikalen Verschiebungsbewegung der Buchse 16 entsprechende Schwenkbewegung um seine Drehachse 26 ausführt. Die Halterung 36 ist über eine Anzahl von Schrauben 38 lösbar mit der Buchse 16 verbunden.

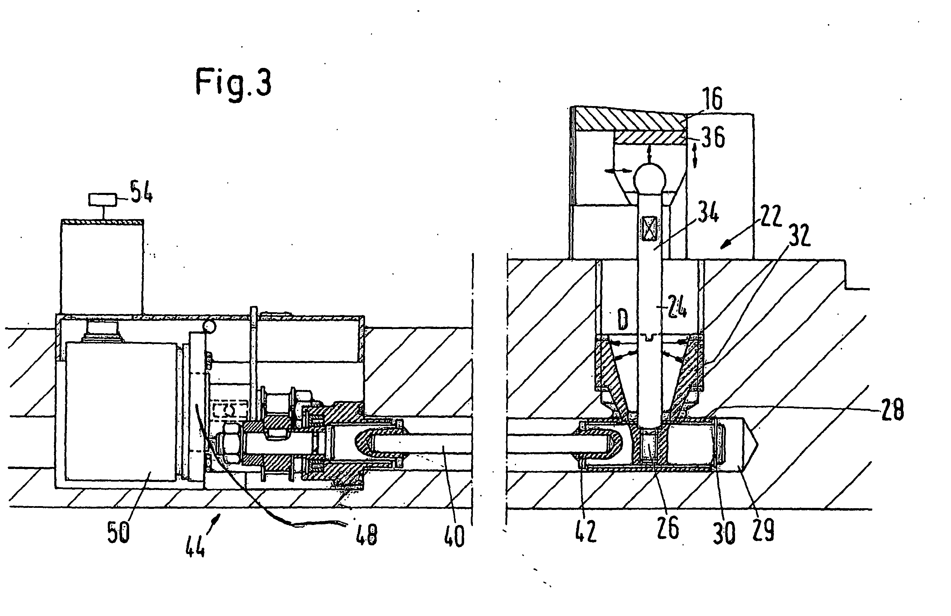

Die Aufnahmeeinheit 22 ist zudem für eine räumliche Entkopplung des eigentlichen Fühlerfingers 24 von der Auswertungseinrichtung für die Drehbewegung ausgelegt, so daß diese hinsichtlich der äußeren Randbedingungen an einer besonders günstigen Stelle positioniert sein kann. Dazu ist, wie aus Fig. 3 ersichtlich, der Fühlerfinger 24 an seinem um die Drehachse 26 schwenkbaren Ende fest mit dem im Wesentlichen parallel zur Walzenachse 6 ausgerichteten Drehstab 40 verbunden. Der Drehstab 40 mündet dabei in eine Öffnung 42 des Rohrs 30 und ist mit diesem Rohr 30 fest verbunden.

Eine mittels des Fühlerfingers 24 aufgrund einer Verschiebung der Buchse 16 ausgeführte Auslenkbewegung wird über den Drehstab 40 in eine winkelproportionale Drehbewegung an dessen freien Ende umgewandelt. Zur Anzeige der Änderung des Mantelhubes M wird die Drehbewegung mittels einer dort angeordneten Umsetzereinheit 44 in ein winkelproportionales elektrisches und/oder mechanisches Signal umgesetzt. Die Umsetzereinheit 44 ist durch einen in einer Halterung 48 angeordneten sogenannten Winkelkodierer 50 gebildet, der mit einer Auswerteeinheit zur Bestimmung eines zum Mantelhub M der Buchse 16 proportionalen Steuersignals anhand des Auslenkwinkels α zusammenwirkt. Die Auswerteeinheit kann auch in den Winkelkodierer 50 integriert sein. Das Steuersignal wird anschließend einem Regler 54 zur Lageregelung des Walzenmantels 12 mittels der Stützelemente 18, 20 zugeführt. Zusätzlich kann die Umsetzereinheit 44 auch einen analogen Winkelanzeiger umfassen, wobei das Signal ebenfalls anhand einer Stromoder Widerstandsänderung als proportionales Signal zum tatsächlichen Weg oder Hub anhand derAus!enkung in einer nicht näher dargestellten Auswerteeinheit verarbeitet werden kann. Zusätzlich kann das Signal über einen Zeiger, welcher auf dem Drehstab 40 im Außenbereich der Walze 1 befestigt ist, in Verbindung mit einer entsprechenden Skalierung ausgegeben werden.

Je nach Art und Aufbau der Walze 1 kann diese an ihren Enden jeweils eine integrierte Aufnahmeeinheit 22 umfassen. Dabei werden die beiden Aufnahmeeinheiten 22 in weitgehend gleicher Art und Position, d. h. möglichst spiegelsymmetrisch, angeordnet. Hierdurch sind auch Differenzen in der endseitigen Positionierung de Walze 1 ermittelbar und bedarfsweise über einen geeigneten Regeleingriff kompensierbar.

Bei der Ausgestaltung nach den Fig. 1 bis 3 wird die Verlagerungsbewegung des Walzenmantels 12 gegenüber der Walzenachse 21 über den Fühlerfinger 24 in eine Drehbewegung des Drehstabes 41 umgesetzt, wobei die Drehbewegung des Drehstabes 40 nach außen geleitet werden kann. Der Drehstab 40 bildet also ein Sensorteil.

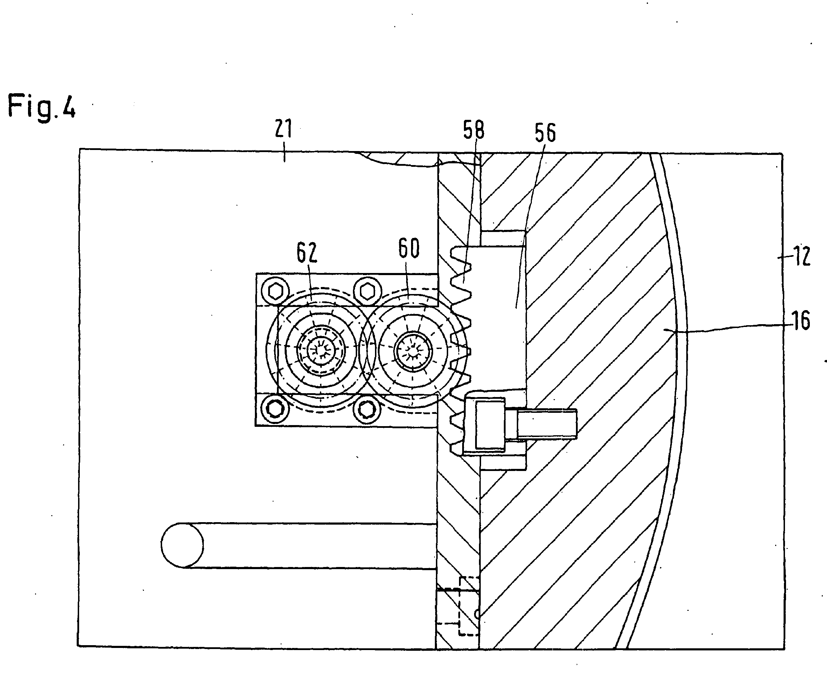

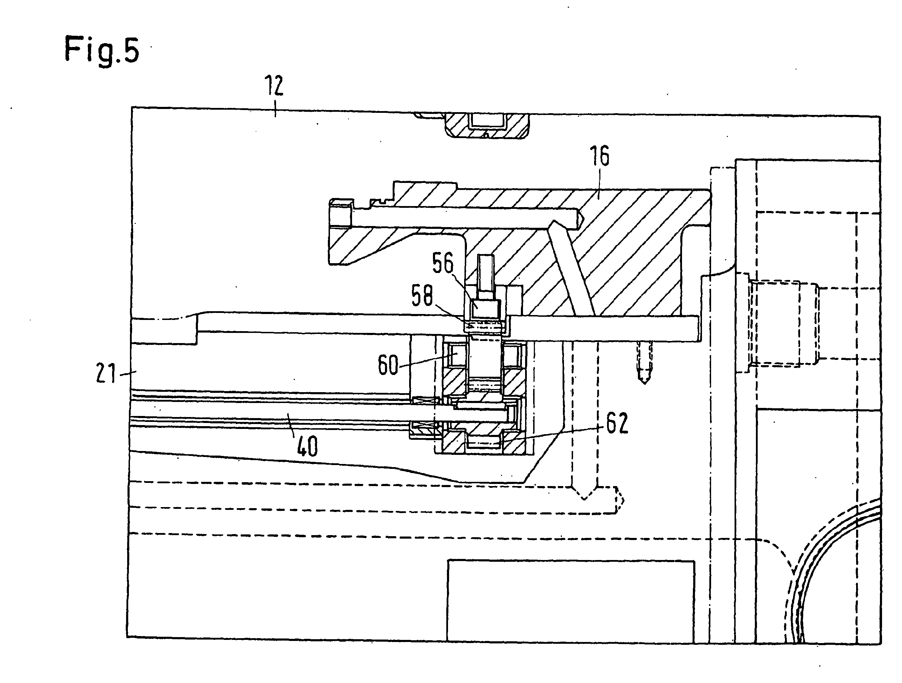

Eine andere Möglichkeit zur Erzeugung einer Drehbewegung des Drehstabes 40 ist in den Fig. 4 und 5 dargestellt. Hier sind Teile, die denen der Fig. 1 bis 3 entsprechen, mit den gleichen Bezugszeichen versehen.

An der Buchse 16 ist eine Zahnstange 56 befestigt, deren Verzahnung 58 parallel zur Verlagerungsrichtung des Walzenmantels 12 gegenüber der Achse 21 verläuft.

Die Zahnstange 56 kämmt mit einem ersten Zahnrad 60, das wiederum in Dreheingriff steht, mit einem zweiten Zahnrad 62. Das zweite Zahnrad 62 ist drehfest mit dem Drehstab 40 verbunden.

Wenn sich nun der Walzenmantel 12 gegenüber der Walzenachse 21 verlagert, dann wird diese im wesentlichen linear verlaufende Vedagerungsbewegung in eine Drehbewegung des zweiten Zahnrades 62 umgesetzt, die wiederum zu einer Drehbewegung des Drehstabes 40 führt. Am anderen Ende des Drehstabes 40 kann dann eine Auswerteeinheit angeordnet sein, wie sie in Fig. 3 dargestellt ist. Auch hier bildet dann der Drehstab ein Sensorteil.

## Patentansprüche

1. Vorrichtung zur Bestimmung eines Mantelhubes (M) einer Walze (1), die einen um eine feststehende Walzenachse (21) drehbaren Walzenmantel (12), der auf mindestens einer zur Walzenachse (21) radial verschiebbaren Buchse (16) geführt ist, und eine in die Walze (1) integrierte Aufnahmeeinheit (22) zur Ermittlung einer Verschiebung der Buchse (16) gegenüber der Walzenachse (21) aufweist, **dadurch gekennzeichnet, daß** die Aufnahmeeinheit (22) einen Drehumsetzer aufweist, der eine Verlagerungsbewegung des Walzenmantels (12) relativ zur Walzenachse (21) in eine Drehbewegung eines Sensorteils umsetzt.

2. Vorrichtung nach Anspruch 1, **dadurch gekennzeichnet, daß** die Aufnahmeeinheit (22) einen als Fühlerfinger (24) ausgebildeten Geber umfaßt, der an der Walzenachse (21) um eine Drehachse (26) schwenkbar angeordnet ist, und dessen freies Ende mit der Buchse (16) in Wirkverbindung steht.

3. Vorrichtung nach Anspruch 2, **dadurch gekennzeichnet, daß** der Fühlerfinger (24) mit seinem freien Ende in einer Öffnung (34) der Buchse (16) geführt ist.

4. Vorrichtung nach einem der Ansprüche 1 bis 3, **dadurch gekennzeichnet, daß** der Drehumsetzer ein Getriebe mit einer Zahnstange und mindestens einem Zahnrad als Geber aufweist.

5. Vorrichtung nach einem der Ansprüche 2 bis 4, **dadurch gekennzeichnet, daß** der Geber drehfest mit einem im Wesentlichen parallel zur Walzenachse (21) ausgerichteten Drehstab (40) verbunden ist.

6. Vorrichtung nach einem der Ansprüche 2 bis 5, **gekennzeichnet durch** eine Umsetzereinheit (44) zur Umsetzung einer Schwenkbewegung des Gebers um seine Drehachse (26) in ein winkelproportionales elektrisches und/oder mechanisches Signal.

7. Vorrichtung nach Anspruch 6, **dadurch gekennzeichnet, daß** die Umsetzereinheit (44) als Winkelkodierer und/oder als analoger Winkelanzeiger ausgebildet ist.

8. Vorrichtung nach einem der Ansprüche 2 bis 7, **gekennzeichnet durch** eine Auswerteeinheit, die anhand einer Schwenkbewegung des Gebers um seine Drehachse ein zum Mantelhub (M) proportionales Steuersignal ermittelt.

9. Vorrichtung nach Anspruch 8, **dadurch gekennzeichnet, daß** die Auswerteeinheit ausgangsseitig mit einem Regler (54) zur Lageregelung des Walzenmantels (12) verbunden ist.

10. Biegeeinstellwalze mit einer Vorrichtung zur Bestimmung eines Mantelhubes (M) nach einem der Ansprüche 1 bis 9.

## Claims

1. Apparatus for determining a shell displacement (M) of a roll (1) which comprises a roll shell (12) which can be rotated about a stationary roll axle (21) and which is guided on at least one bush (16) that can be displaced radially with respect to the roll axle (21), and a pickup unit (22) integrated into the roll (1) for determining the displacement of the bush (16) with respect to the roll axle (21), **characterized in that** the pickup unit (22) comprises a rotary converter, which converts a displacement movement of the roll shell (12) relative to the roll axle (21) into a rotational movement of a sensor part.

2. Apparatus according to Claim 1, **characterized in that** the pickup unit (22) comprises a transmitter constructed as a sensor finger (24), which is arranged on the roll axle (21) such that it can be pivoted about an axis of rotation (26) and whose free end is operatively connected to the bush (16).

3. Apparatus according to Claim 2, **characterized in that** the sensor finger (24) is guided with its free end in an opening (34) in the bush (16).

4. Apparatus according to one of Claims 1 to 3, **characterized in that** the rotary converter has a gear mechanism comprising a rack and at least one gear wheel as transmitter.

5. Apparatus according to one of Claims 2 to 4, **characterized in that** the transmitter is firmly connected so as to rotate with a rotary rod (40) oriented substantially parallel to the roll axle (21).

6. Apparatus according to one of Claims 2 to 5, **characterized by** a converter unit (44) for converting a pivoting movement of the transmitter about its axis of rotation (26) into an electrical and/or mechanical signal proportional to the angle.

7. Apparatus according to Claim 6, **characterized in that** the converter unit (44) is constructed as a rotary encoder and/or as an analogue angle indicator.

8. Apparatus according to one of Claims 2 to 7, **characterized by** an evaluation unit which, by using a pivoting movement of the transmitter about its axis of rotation, determines a control signal proportional to the shell displacement (M).

9. Apparatus according to Claim 8, **characterized in that** an output of the evaluation unit is connected to a controller (54) for controlling the position of the roll shell (12).

10. Controlled deflection roll comprising a device for determining a shell deflection (M) according to one of Claims 1 to 9.

## Revendications

1. Dispositif pour déterminer une course d'enveloppe (M) d'un cylindre (1) qui présente une enveloppe de cylindre (12) pouvant tourner autour d'un axe de cylindre fixe (21), qui est guidée sur au moins un manchon (16) déplaçable radialement par rapport à l'axe du cylindre (21), et une unité de réception (22) intégrée dans le cylindre (1) pour détecter un déplacement du manchon (16) par rapport à l'axe du cylindre (21), **caractérisé en ce que** l'unité de réception (22) présente un convertisseur de rotation qui convertit un mouvement de décalage de l'enveloppe de cylindre (12) relativement à l'axe de cylindre (21) en un mouvement de rotation d'une pièce formant capteur.

2. Dispositif selon la revendication 1, **caractérisé en ce que** l'unité de réception (22) comprend un transducteur réalisé sous forme de doigt palpeur (24) qui est disposé de manière à pouvoir pivoter autour d'un axe de rotation (26) sur l'axe de cylindre (21) et dont l'extrémité libre est en liaison coopérante avec le manchon (16).

3. Dispositif selon la revendication 2, **caractérisé en ce que** le doigt palpeur (24) est guidé avec son extrémité libre dans une ouverture (34) du manchon (16).

4. Dispositif selon l'une quelconque des revendications 1 à 3, **caractérisé en ce que** le convertisseur de rotation présente une transmission avec une crémaillère et au moins une roue dentée servant de transducteur.

5. Dispositif selon l'une quelconque des revendications 2 à 4, **caractérisé en ce que** le transducteur est connecté de manière fixe en rotation à une barre rotative (40) orientée sensiblement parallèlement à l'axe de cylindre (21).

6. Dispositif selon l'une quelconque des revendications 2 à 5, **caractérisé par** une unité de convertisseur (44) pour convertir un mouvement de pivotement du transducteur autour de son axe de rotation (26) en un signal électrique et/ou mécanique proportionnel à l'angle.

7. Dispositif selon la revendication 6, **caractérisé en ce que** l'unité de convertisseur (44) est réalisée sous la forme d'un codeur d'angle et/ou sous la forme d'un indicateur d'angle analogique.

8. Dispositif selon l'une quelconque des revendications 2 à 7, **caractérisé par** une unité d'analyse qui détecte à l'aide d'un mouvement de pivotement du transducteur autour de son axe de rotation un signal de commande proportionnel à la course d'enveloppe (M).

9. Dispositif selon la revendication 8, **caractérisé en ce que** l'unité d'analyse est connectée du côté de la sortie à un régulateur (54) pour le réglage de la position de l'enveloppe de cylindre (12).

10. Cylindre d'ajustement de la flexion comprenant un dispositif pour déterminer une course d'enveloppe (M) selon l'une quelconque des revendications 1 à 9.
